# EUROPÄISCHE PATENTSCHRIFT

(11) **EP 2 843 385 B1**
(45) Veröffentlichungstag und Bekanntmachung des Hinweises auf die Patenterteilung: **14.02.2018**
(21) Anmeldenummer: 14180120.9
(22) Anmeldetag: 07.08.2014
(51) Int. Cl.: G01L 9/00, G01L 19/06, G01L 23/10, G01L 23/18

(54) **Drucksensor**
Pressure sensor
Capteur de pression

(30) Priorität: 30.08.2013 AT 505352013
(43) Veröffentlichungstag der Anmeldung: 04.03.2015
(73) Patentinhaber: Piezocryst Advanced Sensorics GmbH, 8020 Graz (AT)
(72) Erfinder: Steinbrugger, Franz, 8072 Fernitz (AT); Baumgartner, Martin, 8522 Gross St. Florian (AT); Kröger, Dietmar, 8010 Graz (AT)
(74) Vertreter: Babeluk, Michael

(56) Entgegenhaltungen:
- EP-B1- 2 174 107
- CH-A- 392 103
- DE-A1- 3 423 711
- DE-A1- 4 419 138
- US-A- 5 377 547

## Beschreibung

Die Erfindung betrifft einen Drucksensor, vorzugsweise zur Messung heißer, explosiver Medien, mit einem im Wesentlichen rotationssymmetrischen, in eine Messbohrung einsetzbaren Sensorgehäuse, das einen Messwandler aufnimmt, mit einem druckseitig am Sensorgehäuse angeordneten Membranelement, sowie mit einer zum Sensorgehäuse elektrischen isolierten Signalableitung, wobei das Sensorgehäuse in axialer Richtung in einen Hochdruckbereich und einen Niederdruckbereich unterteilt ist, und wobei der Hochdruckbereich den Messwandler aufnimmt und in Abgrenzung zum Niederdruckbereich eine druckdichte Barriere aufweist, die die Signalableitung druckdicht durchsetzt.

Aus der EP 2 174 107 B1, insbesondere deren Fig. 1, ist ein Drucksensor bekannt, der in einem Gehäuse angeordnete, piezoelektrische Messelemente eines Messwandlers aufweist, die zwischen einem Membranelement und einer Gehäusebasis vorgespannt sind. Das Membranelement ist mit dem druckseitigen Ende des Gehäuses verschweißt.

Die piezoelektrischen Messelemente liegen radial außerhalb eines im Wesentlichen entlang der gesamten Sensorlängsachse angeordneten Vorspannelementes, welches die piezoelektrischen Messelemente gegen die Gehäusebasis vorspannt. Das Gehäuse ist mehrteilig ausgeführt, wobei die einzelnen Gehäuseteile nach der Montage der Messelemente miteinander verschweißt werden können.

Die piezoelektrischen Messelemente weisen eine kreisringförmige Ableitelektrode, sowie in Richtung des Membranelementes ein elektrisches Isolierelement auf, wobei eine elektrisch leitende Verbindung zwischen dem Vorspannelement und der Ableitelektrode hergestellt ist, so dass das zentrale Vorspannelement gleichzeitig zur Signalableitung dient. Das Vorspannelement wird durch ein Fixierelement in der vorgespannten Stellung gehalten, wobei das Fixierelement mit dem zentralen Vorspannelement verschraubt oder verschweißt sein kann.

Das Vorspannelement, welches gleichzeitig der Signalableitung dient, tritt an der dem Membranelement gegenüberliegenden Seite des Sensorgehäuses durch ein elektrisches Isolierelement aus, welches aus Keramik bestehen kann.

Bei einem Einsatz des Sensors in der Brennraumwand einer Brennkraftmaschine, können bei einem Membranbruch, d.h. bei einer Zerstörung der dünnen, kreisringförmigen Membran des Membranelementes heiße Abgase in das Innere des Drucksensors eindringen. Bei einer längeren Einwirkung der heißen Abgase auf die Messelemente werden diese zerstört, so dass sich das Vorspannelement nicht mehr an den Messelementen abstützen kann und es zu einer Lockerung des Vorspannelementes, sowie zu einer Zerstörung der Isolierelemente kommt. Das kann in der Folge zur Freisetzung von heißen Abgasen und Flammen aus dem Brennraum führen.

Aus der CH 392 103 A ist ein piezoelektrischer Druckgeber bekannt, dessen Gehäuse druckseitig von einer mit dem Gehäuse verschweißten Membran abgeschlossen ist. Im Gehäuseinneren ist eine dünnwandige Rohrfeder angeordnet, die einen Kristallsatz, bestehend aus drei Einzelkristallkörpern aus einem piezoelektrischen Material aufnimmt. Die Signalableitung erfolgt über eine gewendelte Kontaktfeder, die in die Sackbohrung einer Steckerbuchse eingesetzt ist, wobei die Steckerbuchse mit einem keramischen Isolator, dessen Endpartien in Metallfassungen eingelötet sind, von außen in das Gehäuse eingesetzt ist.

Aufgabe der Erfindung ist es, einen Drucksensor der eingangs beschriebenen Art derart für den Messeinsatz in kritischen Temperatur- und Druckbereichen zu adaptieren, dass selbst bei einem Schadensfall (z.B. Bruch des Membranelementes) ein Ausströmen von heißen, teilweise zündfähigen Fluiden (beispielsweise heiße Gas/Brennstoffgemische) zuverlässig verhindert wird.

Diese Aufgabe wird erfindungsgemäß dadurch gelöst, dass die druckdichte Barriere einen die Ladungsableitung umschließenden Dichtring aus einem hitzebeständigen, elektrisch isolierenden Material aufweist, der in die druckdichte Barriere eingelötet, eingeschweißt, eingeklebt, eingepresst oder eingeschrumpft ist, sowie dass die druckdichte Barriere eine in das Sensorgehäuse eingeschweißte Hülse mit einem Innenflansch aufweist, an welchem sich die Ladungsableitung - bei im Schadensfall axial nach außen wirkenden Druckkräften - mit einem Außenflansch unter Zwischenlage des hitzebeständigen, elektrisch isolierenden Dichtringes abstützt. Bei einem Bruch des Membranelementes werden die heißen, explosiven Gase durch die druckdichte Barriere wirksam daran gehindert vom Messort, beispielsweise dem Brennraum einer Brennkraftmaschine oder einer Gasturbine, in die Messumgebung auszutreten.

Als der Hochdruckbereich wird dabei jener Bereich des Sensorgehäuses angesehen, der bei einem Bruch des Membranelementes mit Hochdruck im Bereich von 60 bar bis 500 bar, insbesondere 120 bar bis 300 bar, beaufschlagt wird.

Bevorzugt besteht der hitzebeständige, elektrisch isolierende Dichtring aus Keramik oder Saphir.

Die Erfindung wird im Folgenden anhand von Ausführungsbeispielen näher erläutert. Es zeigen:
- Fig. 1: einen erfindungsgemäßen Drucksensor in einem Längsschnitt; sowie
- Fig. 2: das Detail II aus Fig. 1 in einer vergrößerten Schnittdarstellung.

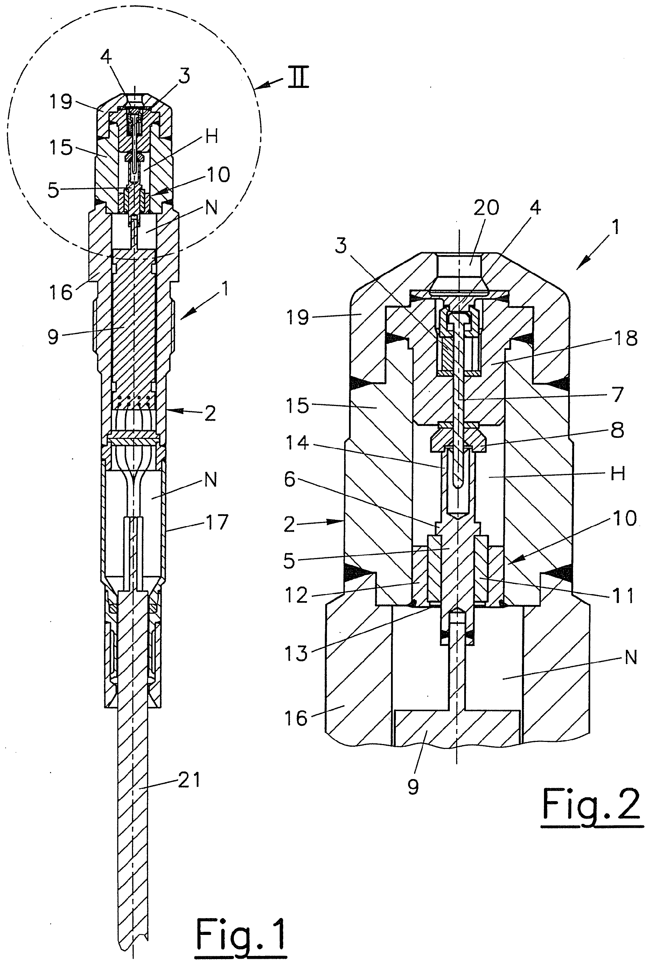

Der in den Fig. 1 und Fig. 2 dargestellte, erfindungsgemäße Drucksensor 1 weist ein im Wesentlichen rotationssymmetrisches, in einer hier nicht weiter dargestellten Messbohrung einsetzbares Sensorgehäuse 2 auf, das im Inneren einen Messwandler 3 - beispielsweise aus piezoelektrischen Messelementen - aufnimmt, wobei druckseitig am Sensorgehäuse 2 ein Membranelement 4 angeordnet ist.

Das Sensorgehäuse 2 ist in axialer Richtung in einen Hochdruckbereich H und einen Niederdruckbereich N unterteilt, wobei der Hochdruckbereich H den Messwandler 3 aufnimmt und in Abgrenzung zum Niederdruckbereich N eine druckdichte Barriere 10 aufweist, die von der zum Sensorgehäuse 2 elektrisch isolierten Signalableitung 5 druckdicht durchsetzt wird. Die druckdichte Barriere 10 ist im dargestellten Ausführungsbeispiel in einem Bereich des mehrteiligen Sensorgehäuses 2 angeordnet, in welchen eine vordere Gehäusehülle 15 mit einer mittleren Gehäusehülle 16 verschweißt ist.

Der piezoelektrische Messwandler 3 ist hier in einem mit der vorderen Gehäusehülle 15 verschweißten Innengehäuse 18 angeordnet und mit einem Vorspannelement 7 vorgespannt, welches die Signalableitung 5 im Hochdruckbereich H des Sensorgehäuses 2 elektrisch leitend kontaktiert. Nach vorne wird der Drucksensor 1 mit einer konisch zulaufenden Sensorkappe 19 abgeschlossen, deren Messöffnung 20 den flexiblen Messbereich des Membranelementes 4 frei gibt.

Bei einem Bruch des Membranelementes 4 können heiße Gase mit hohem Druck von bis zu 500 bar in den vorderen Teil des Sensorgehäuses 2 gelangen, der durch die vordere Gehäusehülle 15 und das Innengehäuse 18 begrenzt ist, werden aber durch die druckdichte Barriere 10 am Austreten aus dem Sensorgehäuse gehindert.

Die druckdichte Barriere 10 weist einen die Ladungsableitung 5 umschließenden Dichtring 11 aus einem hitzebeständigen, elektrisch isolierenden Material auf, der in die druckdichte Barriere 10 eingelötet, eingeschweißt oder eingeklebt ist. Der hitzebeständige, elektrisch isolierende Dichtring 11 besteht bevorzugt aus Keramik oder Saphir und kann in die Barriere 10 zur Herstellung eines Dichtsitzes auch eingepresst oder eingeschrumpft werden (durch Wärme- oder Kältebehandlung der einzelnen Teile).

Erfindungsgemäß kann die druckdichte Barriere 10 eine in das Sensorgehäuse 2 eingeschweißte Hülse 12 mit einem Innenflansch 13 aufweisen, an welchem sich die Ladungsableitung 5 mit einem Außenflansch 6 unter Zwischenlage des eingelöteten Dichtringes 11 aus Keramik oder Saphir abstützt. Auf die Ladungsableitung 5 im Schadensfall axial nach außen wirkende Druckkräfte werden damit optimal abgestützt.

Gemäß einer bevorzugten Ausführungsvariante sind das Vorspannelement 7 und die Signalableitung 5 in axialer Richtung mechanisch weich gekoppelt, wobei beispielsweise die Signalableitung 5 im Kontaktbereich zum Vorspannelement 7 als Rohrfeder 14 ausgebildet ist. Das heißt, dass das Vorspannelement 7 bei einem Bruch des Membranelementes 4 und einer nachfolgenden Zerstörung der piezoelektrischen Elemente des Messwandlers 3 in das Sensorgehäuse hinein gedrückt werden kann, ohne den Dichtsitz der Ladungsableitung 5 in der druckdichten Barriere 10 zu zerstören. Dabei kann beispielsweise der rohrförmige Teil 14 der Ladungsableitung 5 mit dem elektrisch isoliert am Innengehäuse 18 anliegenden Spannelement 8 des Vorspannelementes 7 elektrisch leitend verbunden sein.

Im Niederdruckbereich N des Sensorgehäuses 2, in welchen der normale atmosphärische Druck (Umgebungsdruck im Labor) herrscht, ist geschützt durch die druckdichte Barriere 10 eine die Ladungsableitung 5 elektrisch kontaktierende Ladungsverstärkereinheit 9 angeordnet.

An die mittlere Gehäusehülle 16, die die Ladungsverstärkereinheit 9 aufnimmt, schließt eine hintere Gehäusehülle 17 an, aus welcher das mehrpolige Anschlusskabelkabel 21 des Sensors austritt.

Als Messwandler 3 können auch piezorestriktive Elemente oder Dehnmessstreifen eingesetzt werden.

## Patentansprüche

1. Drucksensor (1), vorzugsweise zur Messung heißer, explosiver Medien, mit einem im Wesentlichen rotationssymmetrischen, in eine Messbohrung einsetzbaren Sensorgehäuse (2), das einen Messwandler (3) aufnimmt, mit einem druckseitig am Sensorgehäuse (2) angeordneten Membranelement (4), sowie mit einer zum Sensorgehäuse (2) elektrischen isolierten Signalableitung (5), wobei das Sensorgehäuse (2) in axialer Richtung in einen Hochdruckbereich (H) und einen Niederdruckbereich (N) unterteilt ist, und wobei der Hochdruckbereich (H) den Messwandler (3) aufnimmt und in Abgrenzung zum Niederdruckbereich (N) eine druckdichte Barriere (10) aufweist, die die Signalableitung (5) druckdicht durchsetzt, **dadurch gekennzeichnet, dass** die druckdichte Barriere (10) einen die Ladungsableitung (5) umschließenden Dichtring (11) aus einem hitzebeständigen, elektrisch isolierenden Material aufweist, der in die druckdichte Barriere (10) eingelötet, eingeschweißt, eingeklebt, eingepresst oder eingeschrumpft ist, sowie dass die druckdichte Barriere (10) eine in das Sensorgehäuse (2) eingeschweißte Hülse (12) mit einem Innenflansch (13) aufweist, an welchem sich die Ladungsableitung (5) - bei im Schadensfall axial nach außen wirkenden Druckkräften - mit einem Außenflansch (6) unter Zwischenlage des hitzebeständigen, elektrisch isolierenden Dichtringes (11) abstützt.

2. Drucksensor (1) nach Anspruch 1, **dadurch gekennzeichnet, dass** der hitzebeständige, elektrisch isolierende Dichtring (11) aus Keramik oder Saphir besteht.

3. Drucksensor (1) nach Anspruch 1 oder 2, **dadurch gekennzeichnet, dass** der Hochdruckbereich (H) jenen Bereich des Sensorgehäuses (2) umfasst, der bei einem Bruch des Membranelementes (4) mit Hochdruck im Bereich von 60 bar bis 500 bar, insbesondere 120 bar bis 300 bar, beaufschlagbar ist.

4. Drucksensor (1) nach einem der Ansprüche 1 bis 3, **dadurch gekennzeichnet, dass** der Messwandler (3) ein Vorspannelement (7) aufweist, welches die Signalableitung (5) im Hochdruckbereich (H) des Sensorgehäuses (2) elektrisch leitend kontaktiert.

5. Drucksensor (1) nach Anspruch 4, **dadurch gekennzeichnet, dass** das Vorspannelement (7) und die Signalableitung (5) in axialer Richtung mechanisch weich gekoppelt sind, wobei beispielsweise die Signalableitung (5) im Kontaktbereich zum Vorspannelement (7) als Rohrfeder (14) ausgebildet ist.

6. Drucksensor (1) nach einem der Ansprüche 1 bis 5, **dadurch gekennzeichnet, dass** im Niederdruckbereich (N) des Sensorgehäuses (2), geschützt durch die druckdichte Barriere (10), eine die Ladungsableitung (5) elektrisch kontaktierende Ladungsverstärkereinheit (9) angeordnet ist.

7. Drucksensor (1) nach einem der Ansprüche 1 bis 6, **dadurch gekennzeichnet, dass** der Messwandler (3) ein piezoelektrisches oder piezorestriktives Element oder einen Dehnmessstreifen aufweist.

## Claims

1. Pressure sensor (1), preferably for measuring hot, explosive media, having a substantially rotationally symmetrical sensor housing (2) which can be inserted into a measuring bore and accommodates a measuring transducer (3) with a membrane element (4) arranged on the pressure side of the sensor housing (2), and having a signal lead (5) which is electrically insulated from the sensor housing (2), wherein the sensor housing (2) is subdivided in the axial direction into a high pressure region (H) and a low pressure region (N), and wherein the high pressure region (H) accommodates the measuring transducer (3) and comprises a pressure-tight barrier (10) for separation from the low pressure region (N), which penetrates the signal lead (5) in a pressure-tight manner, **characterised in that** the pressure-tight barrier (10) comprises a sealing ring (11) made from a heat-resistant, electrically insulating material which encloses the signal lead (5) and which is soldered, welded, glued, pressed or shrunk into the pressure-tight barrier (10), and that the pressure-tight barrier (10) comprises a sleeve (12) with an inner flange (13) which is welded into the sensor housing (2), on which the signal lead (5) - in case of pressure forces acting axially outwardly in the case of damage - is supported with an outer flange (6) by interposing the heat-resistant, electrically insulating sealing ring (11).

2. Pressure sensor (1) according to claim 1, **characterised in that** the heat-resistant, electrically insulating sealing ring (11) consists of ceramic or sapphire.

3. Pressure sensor (1) according to claim 1 or 2, **characterised in that** the high-pressure region (H) comprises the region of the sensor housing (2) which during breakage of the membrane element (4) can be supplied with high pressure in the range of 60 bar to 500 bar, in particular 120 bar up to 300 bar.

4. Pressure sensor (1) according to one of the claims 1 to 3, **characterised in that** the measuring transducer (3) has a pretensioning element (7) which electrically conductively contacts the signal lead (5) in the high pressure region (H) of the sensor housing (2).

5. Pressure sensor (1) according to claim 4, **characterised in that** the pretensioning element (7) and the signal lead (5) are coupled mechanically soft in the axial direction, wherein, for example, the signal lead (5) is formed in the contact region to the pretensioning element (7) as a tubular spring (14).

6. Pressure sensor (1) according to one of the claims 1 to 5, **characterised in that** in the low pressure region (N) of the sensor housing (2), protected by the pressure-tight barrier (10), a charge amplifier unit (9) is arranged which electrically contacts the signal lead (5).

7. Pressure sensor (1) according to one of the claims 1 to 6, **characterised in that** the measuring transducer (3) has a piezoelectric or piezorestrictive element or a strain gauge.

## Revendications

1. Capteur de pression (1) de préférence destiné à la mesure de fluides explosifs chaud, comprenant un boîtier de capteur (2) essentiellement symétrique en rotation susceptible d'être introduit dans un perçage de mesure, et qui reçoit un transducteur de mesure (3), un élément de membrane (4) monté côté pression sur le boîtier de capteur (2), ainsi qu'une sortie de signal (5) électriquement isolée du boîtier de capteur (2), le boîtier de capteur (2) étant subdivisé en direction axiale en une zone haute pression (H) et en une zone basse pression (N), et la zone haute pression (H) recevant le transducteur (3) et comportant à la limite de la zone basse pression (N) une barrière étanche à la pression (10) qui traverse de façon étanche à la pression la sortie de signal (5), **caractérisé en ce que**
la barrière étanche à la pression (10) comporte une bague d'étanchéité (11) entourant la sortie de charge (5), réalisée en un matériau résistant à la chaleur et électriquement isolant, qui est brasée, soudée, collée, introduite à force ou serrée dans la barrière étanche à la pression (10), et la barrière étanche à la pression (10) comporte un manchon (12) soudé dans le boîtier de capteur (2) comportant une bride interne (13) sur laquelle s'appuie la sortie de charge (5) - en présence de forces de pression agissant axialement vers l'extérieur en cas de dommage -, par une bride externe (6) avec interposition de la bague d'étanchéité (11) résistant à la chaleur et électriquement isolante.

2. Capteur de pression (1) conforme à la revendication 1,
**caractérisé en ce que**
la bague d'étanchéité (11) résistant à la chaleur et électriquement isolante est réalisée en céramique ou en saphir.

3. Capteur de pression (1) conforme à la revendication 1 ou 2, **caractérisé en ce que**
la zone haute pression (H) renferme toutes les zones du capteur de pression (2) qui, en cas de rupture de l'élément de membrane (4) peuvent être soumises à une haute pression située dans la plage de 60 bars à 500 bars, en particulier de 120 bars à 300 bars.

4. Capteur de pression (1) conforme à l'une des revendications 1 à 3, **caractérisé en ce que**
le transducteur (3) comprend un élément de rappel (7) vient en contact de façon électriquement conductrice avec la sortie de signal (5) dans la zone haute pression (H) du boîtier de capteur (2).

5. Capteur de pression (1) conforme à la revendication 4,
**caractérisé en ce que**
l'élément de rappel (7) et la sortie de signal (5) sont couplés mécaniquement de façon souple en direction axiale, et, par exemple, la sortie de signal (5) est réalisée dans la zone de contact avec l'élément de rappel (7) sous la forme d'un ressort tubulaire (14).

6. Capteur de pression (1) conforme à l'une des revendications 1 à 5, **caractérisé en ce que**
dans la zone basse pression (N) du boîtier de capteur (2), est montée, en étant protégée par la barrière étanche à la pression (10) une unité d'amplification de charge (9) venant en contact électrique avec la sortie de charge (5).

7. Capteur de pression (1) conforme à l'une des revendications 1 à 6, **caractérisé en ce que**
le transducteur (3) comporte un élément piézoélectrique ou piézorestrictif ou une bande de mesure d'allongement.
